# EUROPEAN PATENT APPLICATION

(11) **EP 4 135 265 A1**
(43) Date of publication of application: **15.02.2023**
(21) Application number: 20931157.0
(22) Date of filing: 14.04.2020
(51) Int. Cl.: H04L 12/28, G05B 19/418

(54) **METHOD AND APPARATUS FOR CONTROLLING DEVICE IN INTERNET OF THINGS, AND GATEWAY DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: RU, Zhao, Dongguan, Guangdong 523860 (CN)
(74) Representative: Thorniley, Peter
(86) International application number: PCT/CN2020/084776
(87) International publication number: WO 2021/207942

(57) **Abstract**

Disclosed are a method and apparatus for controlling a device in the Internet of Things, and a gateway device and a storage medium, which relate to the technical field of the Internet of Things. The method comprises: acquiring remote access attribute information of all resource links, wherein the remote access attribute information is used for indicating whether a corresponding resource link is allowed to be remotely accessed; when there is a first resource link, remote access attribute information corresponding to the first resource link indicates that the first resource link is allowed to be remotely accessed, and an operation request sent by a client device on the basis of the first resource link is received, triggering a server device to execute a functional operation corresponding to the first resource link; and when there is a second resource link, and remote access attribute information corresponding to the second resource link indicates that the second resource link is not allowed to be remotely accessed, performing access isolation on the second resource link. The present solution can prevent a client device from accessing a resource link, which is not suitable for being remotely controlled, in a server device, thereby extending the application scenarios of remote control in the Internet of Things.

## Description

### Technical Field

The present application relates to the field of Internet of Things technologies, in particular to a method and apparatus for controlling a device in Internet of Things, a gateway device, and a storage medium.

### Background

In Internet of Things (IOT), a user may remotely control a function operation of a server device through a client device.

In the related art, after a server device in the Internet of Things accesses a gateway device, the gateway device publishes all resource links related to remote control operations in the server device to a cloud. After logging in to the cloud, the client device may acquire resource links published by the server device from the cloud, and display the acquired resource links. The user may choose to trigger a resource link corresponding to a certain function operation. Then, the client device sends an operation request to the gateway device through the cloud, and the gateway device controls the server device to perform the corresponding function operation.

However, in some scenarios, the server device is not suitable for being remotely controlled, and in the related art, the user may remotely control all functions of the server device through the client device, which leads to limited application scenarios of solutions in the related art.

### Summary

Embodiments of the present application provide a method and apparatus for controlling a device in Internet of Things, a gateway device, and a storage medium. The technical solutions are as follows.

In an aspect, an embodiment of the present application provides a method for controlling a device in Internet of Things. The method includes: acquiring remote access property information of various resource links of a server device, wherein the remote access property information is used for indicating whether a corresponding resource link is allowed to be accessed remotely; triggering the server device to perform a function operation corresponding to a first resource link, when the first resource link exists in the various resource links, remote access property information corresponding to the first resource link indicates that remote access is allowed, and an operation request sent by a client device based on the first resource link is received; and performing access isolation on a second resource link, when the second resource link exists in the various resource links, and remote access property information corresponding to the second resource link indicates that remote access is not allowed; wherein the access isolation is used for restricting remote access, performed by the client device, to the second resource link.

In another aspect, an embodiment of the present application provides an apparatus for controlling a device in Internet of Things, wherein the apparatus includes: a property information acquisition module, configured to acquire remote access property information of various resource links of a server device, wherein the remote access property information is used for indicating whether a corresponding resource link is allowed to be accessed remotely; an operation triggering module, configured to trigger the server device to perform a function operation corresponding to a first resource link, when the first resource link exists in the various resource links, remote access property information corresponding to the first resource link indicates that remote access is allowed, and an operation request sent by a client device based on the first resource link is received; and an access isolation module, configured to perform access isolation on a second resource link, when the second resource link exists in the various resource links, and remote access property information corresponding to the second resource link indicates that remote access is not allowed, wherein the access isolation is used for restricting remote access, performed by the client device, to the second resource link.

In still another aspect, an embodiment of the present application provides a gateway device, including a processor, a memory, and a transceiver. The memory stores a computer program thereon for being executed by the processor to implement the above method for controlling the device in the Internet of Things.

In yet another aspect, an embodiment of the present application further provides a computer-readable storage medium, storing a computer program thereon, and the computer program is loaded and executed by a processor to implement the above method for controlling the device in the Internet of Things.

In yet another aspect, the present application provides a computer program product, wherein the computer program product enables a terminal to perform the above method for controlling the device in the Internet of Things when being run on the terminal.

The technical solutions according to the embodiments of the present application can bring the following beneficial effects: by setting their own remote access property information for resource links to indicate whether a corresponding resource link is allowed to be accessed remotely, later a gateway device may control, according to the remote access property information corresponding to the resource links, a client device to access resource links which are allowed to be accessed, and restrict the access, performed by the client device, to resource links which are not allowed to be accessed, thereby preventing the client device from accessing resource links which are not suitable for remote control in a server device, and expanding application scenarios of remote control in the Internet of Things.

### Brief Description of Drawings

In order to describe technical solutions in the embodiments of the present application more clearly, drawings that need to be used in the description of the embodiments will be briefly introduced below. It is apparent that the drawings described below are only some embodiments of the present application, and for those of ordinary skills in the art, other drawings may be obtained according to these drawings without paying any inventive effort.
FIG. 1 is a schematic diagram of a network architecture in Internet of Things according to an embodiment of the present application.
FIG. 2 is a flowchart of a method for controlling a device in Internet of Things according to an embodiment of the present application.
FIG. 3 is a diagram of a framework of an implementation of remote access in Internet of Things according to an embodiment of the present application.
FIG. 4 is a flowchart of a method for controlling a device in Internet of Things according to an embodiment of the present application.
FIG. 5 is a schematic diagram of a remote access flow involved in the embodiment shown in FIG. 4.
FIG. 6 is a flowchart of a method for controlling a device in Internet of Things according to an embodiment of the present application.
FIG. 7 is a schematic diagram of a remote access flow involved in the embodiment shown in FIG. 6.
FIG. 8 is a flowchart of a method for controlling a device in Internet of Things according to an embodiment of the present application.
FIG. 9 is a schematic diagram of a remote access flow involved in the embodiment shown in FIG. 8.
FIG. 10 is a block diagram of an apparatus for controlling a device in Internet of Things according to an embodiment of the present application.
FIG. 11 is a schematic diagram of a structure of a gateway device according to an embodiment of the present application.

### Detailed Description

In order to make objects, technical solutions, and advantages of the present application clearer, implementations of the present application will be described in further detail below with reference to the drawings.

Network architectures and service scenarios described in the embodiments of the present application are intended to illustrate the technical solutions of the embodiments of the present application more clearly, but do not constitute a limitation to the technical solutions according to the embodiments of the present application. Those of ordinary skills in the art may know that with evolvement of network architectures and emergence of new service scenarios, the technical solutions according to the embodiments of the present application are also applicable to similar technical problems.

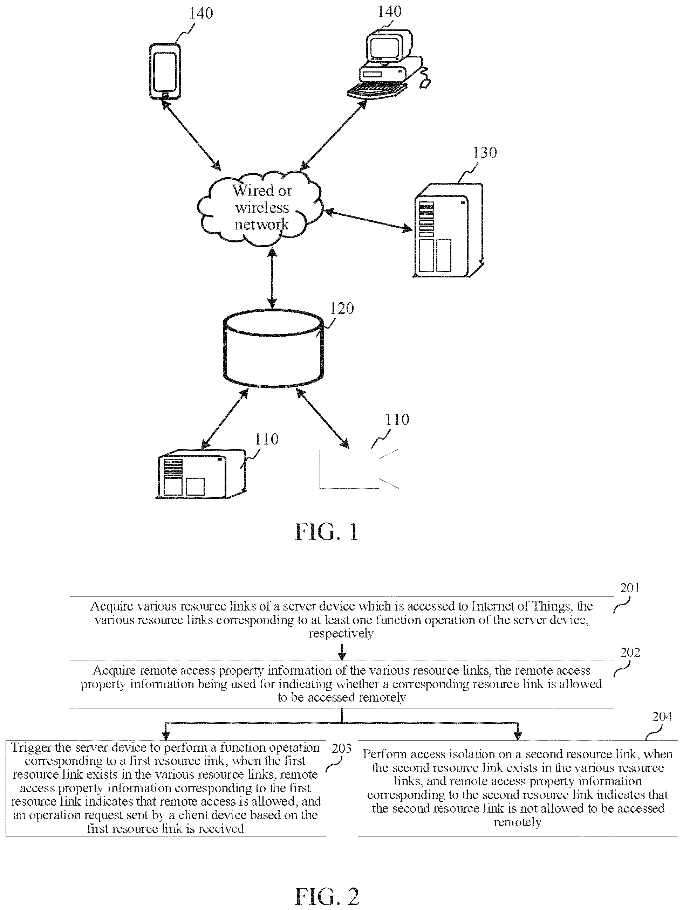

Referring to FIG. 1, FIG. 1 shows a schematic diagram of a network architecture in Internet of Things according to an embodiment of the present application. The network architecture of the Internet of Things may include: a server device 110, a gateway device 120, a cloud server 130, and a client device 140.

The server device 110 may be a device for providing an Internet of Things function service. For example, the server device 110 may be a smart home device, such as a smart TV, a smart air conditioner, a smart refrigerator, a smart microwave oven, a smart rice cooker, a sweeping robot, or the like. Or, the server device 110 may be an industrial production device, such as a lathe, an industrial robot, a solar panel, a wind driven generator, or the like. Or, the server device 110 may be a commercial service device, such as an unmanned vending machine, or the like. Or, the server device 110 may be an intelligent monitoring device, such as a monitoring camera, an infrared sensor, a sound sensor, a temperature sensor, or the like.

The gateway device 120 is a network device implementing network interconnection above a network layer, also referred to as an inter-network connector, a protocol converter, etc. The gateway device 120 provides a network connection service for the server device 110.

The gateway device 120 may be a professional gateway, such as a home gateway, or the gateway device 120 may be an access device having a gateway function, such as a router having a gateway function.

The cloud server 130 is a server deployed on a network side.

The client device 140 is a terminal device on a user side. For example, the client device may be a smart phone, a tablet, a smart watch, or the like; or, the client device may be a personal computer, such as a desktop computer, a portable computer, a personal workstation, or the like.

In an embodiment of the present application, the server device 110, the gateway device 120, the cloud server 130, and the client device 140, described above, may be Internet of Things devices meeting industry specifications, for example, may be Internet of Things devices meeting an Open Connectivity Foundation (OCF) specification.

The server device 110 is connected with the gateway device 120 via a wired or wireless network, and the cloud server 130 is connected with the gateway device 120 and the client device 140 via a wired or wireless network, respectively.

Optionally, the wired or wireless network described above adopts a standard communication technology and/or protocol. For example, the wired or wireless network described above may be a communication network based on an Internet of Things (IoT) protocol.

In an Internet of Things system, remote access of a client device to a server device is usually relayed and controlled by a gateway device. Referring to FIG. 2, FIG. 2 shows a flowchart of a method for controlling a device in Internet of Things according to an embodiment of the present application. The method may be performed by a gateway device, and for example, the gateway device may be the gateway device 120 of the network architecture shown in FIG. 1. The method may include the following acts 201 to 204.

In the act 201, various resource links of a server device which is accessed to the Internet of Things are acquired, wherein the various resource links correspond to at least one function operation of the server device respectively.

In the IoT protocol, resources are used for describing an entity device of the Internet of Things, as well as information, such as a function service provided by a device and a state of the device, etc., and a device providing the resources is a server device, and a device accessing the resources is a client device. Optionally, the client device and the server device may also be logical functional entities, and each device may be a client device, a server device, or both the client device and the server device. For example, a device (such as a light bulb) which implements a certain most basic function may only be used as the server device and provided to the client device for query and control.

Optionally, service interaction between the client device and the server device may be achieved by performing a RESTful operation on resources, i.e., CROON operation manners such as Create, Retrieve, Update, Delete, and Notify. The client device is an initiator of the RESTful operation, and the server device is a responder of the RESTful operation. The client device sends a resource operation request to the server device to requests to operate a resource on the server device, and the server device performs a resource operation and feeds back a response to the client device, wherein a content and description information of the resource are carried in the response.

In the IoT protocol, it is a resource model layer which describes resources, and each resource corresponds to a specific Uniform Resource Identifier (URI), wherein the resource may be accessed by accessing the URI of the resource. In addition, each resource has a corresponding interface supporting the Restful operation. It is a transport protocol layer which transmits the content and the description information of the resource. By mapping the resource operation to a specific transport protocol, the Restful operation of each resource is transformed into an entity message delivered between devices, so as to realize interconnection and interworking between devices.

Resources reside in a device, and each resource has its own resource URI, wherein the resource URI may be designated by a creator of the resource when the resource is created. Optionally, the resource URI is predefined for part of specific resources, that is, the resource has a fixed URI. A resource has one or more resource types, and a request to create a resource needs to designate a resource type corresponding to the resource.

In order to represent a reference relationship between resources, the IoT protocol further defines a resource link (also referred to as a resource reference). A resource Link consists of a set of defined parameters, each parameter is represented by a key-value pair, and the parameter includes a context URI, a target URI, a relationship between the context URI and the target URI, and metadata related to the Link.

In the act 202, remote access property information of the various resource links is acquired, wherein the remote access property information is used for indicating whether a corresponding resource link is allowed to be accessed remotely.

In an embodiment of the present application, the resource link is additionally provided with the remote access property information.

Herein, each resource link has its own parameters, such as a Link instance parameter "ins", a policy parameter "p", a media type parameter "type", a device ID parameter "di", and an endpoint parameter "eps". In an embodiment of the present application, the remote access property information of the resource link may be set in a certain parameter which the resource link has by its own, and correspondingly, the gateway device may read the remote access property information of the various resource links from parameters of the various resource links.

In the act 203, the server device is triggered to perform a function operation corresponding to a first resource link, when the first resource link exists in the various resource links, remote access property information corresponding to the first resource link indicates that remote access is allowed, and an operation request sent by a client device based on the first resource link is received.

Optionally, the first resource link is any resource link among the various resource links.

In an embodiment of the present application, the gateway device may trigger the server device to perform the function operation corresponding to the first resource link, when receiving the operation request sent by the client device based on the first resource link among the various resource links (i.e., requesting to trigger the function operation corresponding to the first resource link) and the first resource link is allowed to be accessed remotely.

In the act 204, access isolation is performed on a second resource link, when the second resource link exists in the various resource links, and remote access property information corresponding to the second resource link indicates that the second resource link is not allowed to be accessed remotely.

Herein, the above access isolation is used for restricting the remote access, performed by the client device, to the second resource link.

Optionally, the second resource link is any resource link other than the first resource link among the various resource links.

Correspondingly, if the remote access property information corresponding to the second resource link indicates that the second resource link is not allowed to be accessed remotely, the gateway device will restrict the remote access, performed by the client device, to the second resource link.

To sum up, according to the solution illustrated in the embodiment of the present application, by setting their own remote access property information for resource links to indicate whether a corresponding resource link is allowed to be accessed remotely, later a gateway device may control, according to the remote access property information corresponding to the resource links, a client device to access resource links which are allowed to be accessed, and restrict the remote access, performed by the client device, to resource links which are not allowed to be accessed, thereby preventing the client device from accessing resource links which are not suitable for remote control in the server device, and expanding application scenarios of remote control in the Internet of Things.

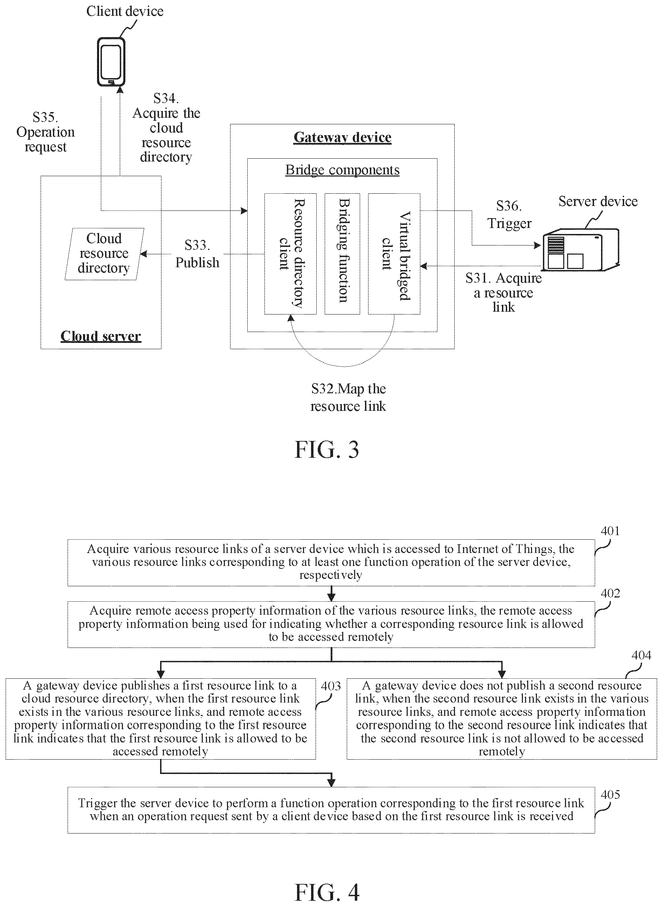

Referring to FIG. 3, FIG. 3 shows a diagram of a framework of an implementation of remote access in Internet of Things according to an embodiment of the present application. As shown in FIG. 3, the gateway device realizes publishing of resource links and reception and control of operation requests through bridge components. An implementation process of the remote access in Internet of Things may include the following acts S31 to S36.

In the S31, the gateway device acquires various resource links of a server device through a virtual bridged client in the bridge components.

The gateway device (Gateway) connects the server device (Bridged Server) through the virtual bridged client and acquires a resource link of the server device, after the gateway device discovers the server device in the network, or the server device discovers and registers in the gateway device.

In the S32, the gateway device maps the resource link to a Resource Directory (RD) client through a bridging function.

In the S33, the gateway device publishes a resource directory in the resource directory client to a cloud resource directory in a cloud server.

In the S34, the client device acquires the cloud resource directory from the cloud server and displays it.

In the S35, the client device sends an operation request to the gateway device to request to access a target resource link.

In the S36, the gateway device triggers the server device to perform a function operation corresponding to the target resource link.

Based on the implementation process of the remote access shown in FIG. 3, the gateway device realizes a function of controlling the client device to access a resource link which is allowed to be accessed, and performing access isolation on a resource link which is not allowed to be accessed to restrict the access, performed by the client device, to the resource link which is not allowed to be accessed, which may be realized in the following modes one to three.

Mode one: resource links which are allowed to be accessed are published to the cloud, but resource links which are not allowed to be accessed are not published.

Mode two: various resource links are published to the cloud after interfaces of the resource links which are not allowed to be accessed are modified.

Mode three: various resource links are published to the cloud, and when the operation request is received, whether to trigger a function operation corresponding to a certain operation request is determined according to whether a corresponding resource link is allowed to be accessed.

Subsequent embodiments of the present application will introduce the solutions shown in FIG. 2 by taking the above three modes as examples, respectively.

Referring to FIG. 4, FIG. 4 shows a flowchart of a method for controlling a device in Internet of Things according to an embodiment of the present application. The method may be performed by a gateway device, and for example, the gateway device may be the gateway device 120 of the network architecture shown in FIG. 1. The method for controlling the device in the Internet of Things may include the following acts 401 to 405.

In the act 401, various resource links of a server device which is accessed to the Internet of Things are acquired, wherein the various resource links correspond to at least one function operation of the server device respectively.

Optionally, the gateway device acquires the above various resource links belonging to a designated type among resource links which the server device has.

There may be many resource links in the server device. Part of the many resource links does not have a function of being accessed remotely, while another part of the many resource links has the function of being accessed remotely. In the solution illustrated in the embodiment of the present application, the gateway device may acquire resource links of the designated type as the above various resource links, when acquiring the resource links of the server device, thereby avoiding subsequent processing of unnecessary resource links, improving efficiency for device control, and saving processing resources.

In an embodiment of the present application, resources corresponding to the above resource links may be classified into three types of resources: a core resource, a device resource, and a function resource. See the following for related descriptions.
(1) Core resource. The core resource is used for supporting interaction of basic functions of a device (such as discovering a device, managing a device, etc.), regardless of device category. One device may support the following three basic core resources: "/oic/res", "/oic/p", and "/oic/d".

Optionally, the device may support other core resources defined in other standards, such as "/example/oic/con", "/oic/mnt", according to other function interactions that it supports.

The following Table 1 may be referred to for the above core resources.

**Table 1**

| Predefined URI | Resource name | Resource type | Interaction of related functions | Whether it is mandatory |
|---|---|---|---|---|
| /oic/res | Default | "oic.wk.res" | Discovery | Yes |
| /oic/p | Platform | "oic.wk.p" | Discovery | Yes |
| /oic/d | Device | "oic.wk.d" | Discovery | Yes |
| None | Configuration | "oic.wk.con" | Device management | No |
| None | Maintenance | "oic.wk.mnt" | Device management | No |

(2) Device resource. The device resource is a special kind of resource for a specific device category, and is used for classifying management function resources.

(3) Function resource. The function resource is a resource used for operating and providing a device function and a service.

In an embodiment of the present application, the gateway device may acquire resource links belonging to a type with the above predefined URI of /oic/res among the resource links which the server device has as the above various resource links.

In the act 402, remote access property information of the various resource links is acquired, wherein the remote access property information is used for indicating whether a corresponding resource link is allowed to be accessed remotely.

In a possible implementation, the gateway device may acquire designated key values in target policy parameters of the various resource links, when acquiring the remote access property information, wherein a target policy parameter is used for indicating a policy rule for accessing a corresponding resource link; then, designated bits in the designated key values corresponding to the various resource links are acquired as the remote access property information of the various resource links.

In an embodiment of the present application, the above target policy parameter may be a policy parameter "p" of the resource link, and a designated key value may be a key value "bm" in the policy parameter "p".

The policy parameter "p" defines various rules for correctly accessing to a resource referenced by one target URI. The policy rule is configured by a series of key-value pairs, and the "bm" key in the policy parameter "p" is defined as follows.

The "bm" key corresponds to one integer value, wherein the integer value corresponds to one bit mask of 8-bit. Each bit in the bit mask corresponds to one particular policy rule. In an embodiment of the present application, as shown in Table 2, for the "bm", the following rules are specified.

**Table 2**

| Bit position | Policy rule | Comment |
|---|---|---|
| Bit 0 (First least significant bit) | Discoverable | The discoverable rule defines whether the Link is to be contained in a resource discovery message: |
| | | - if the Link is to be contained in the resource discovery message, "p" will include a "bm" key and a value of the discoverable bit shall be set as 1; |
| | | - if the Link is not to be contained in the resource discovery message, it may be chosen that "p" includes the "bm" key and a value of the discoverable bit is set as 0, or the "bm" key is omitted. |
| Bit 1 (Second least significant bit) | Observable | The observable rule defines whether a resource referenced by a target URI supports a notification (NOTIFY) operation. |
| | | - If the resource supports the notification operation, "p" shall include the "bm" key and a value of the observable bit shall be set as 1. |
| | | - If the resource does not support the notification operation, it may be chosen that "p" includes the "bm" key and a value of the observable bit is set as 0, or the "bm" key is omitted. |
| Bit 2 (Third least significant bit) | Remotely accessible | The remotely accessible rule defines whether the link is to be published and exposed in a cloud resource directory. |
| | | If the link is to be published and exposed in the cloud resource directory, "p" shall include the "bm" key and a value of the remotely accessible bit shall be set as 1. |
| Bits 3 to 7 | -- | Reserved for future use. Values of all reserved bits in the "bm" shall be set as 0. |

In an embodiment of the present application, if all bits in "bm" are set as 0, the "bm" key may be completely omitted from the "p" parameter for improving efficiency. If any bit of the "bm" key is set as 1, "p" shall include the "bm" key.

For example, as shown in Table 2, for one resource which is discoverable and observable, the value of the "bm" key in the policy parameter "p" is: 11000000.

For another example, as shown in Table 2, for one resource which is discoverable, observable, and accessible remotely, the value of the "bm" key in the policy parameter "p" is: 11100000.

In the act 403, the gateway device publishes a first resource link to a cloud resource directory, when the first resource link exists in the various resource links, and remote access property information corresponding to the first resource link indicates that the first resource link is allowed to be accessed remotely.

Herein, the first resource link is any resource link among the various resource links.

In an embodiment of the present application, when remote access property information of any resource link among the various resource links indicates that the resource link is allowed to be accessed remotely, the gateway device may publish the resource link to the cloud resource directory, so that the client device acquires the resource link from the cloud resource directory and displays it.

Optionally, in a control interface displayed on a client device side, the resource link may be displayed as a corresponding operable control, such as an operable press key, or an operable sliding bar, etc. A display form of the above operable control is not limited in the embodiments of the present application.

According to the solution illustrated in the embodiment of the present application, for a certain server device, when a resource link of a certain designated type in the server device is suitable for being accessed remotely, a developer may set remote access property information in the resource link to indicate that the resource link is allowed to be accessed remotely, and after acquiring a remote access property of the resource link, the gateway device confirms that the resource link is allowed to be accessed remotely, and publishes the resource link to the cloud resource directory. Correspondingly, after logging in to the cloud resource directory and acquiring the resource link, the client device may display an operable control corresponding to the resource link in an interface.

In the act 404, the gateway device does not publish a second resource link, when the second resource link exists in the various resource links, and remote access property information corresponding to the second resource link indicates that the second resource link is not allowed to be accessed remotely.

Herein, the second resource link is any resource link other than the first resource link among the various resource links.

In an embodiment of the present application, when remote access property information of any resource link among the above various resource links indicates that the resource link is not allowed to be accessed remotely, the gateway device may not publish the resource link to the cloud resource directory, so that the client device cannot acquire the resource link from the cloud resource directory and displays it.

According to the solution illustrated in the embodiment of the present application, for a certain server device, when a resource link of a certain designated type in the server device is not suitable for being accessed remotely, the developer may set remote access property information in the resource link to indicate that the resource link is not allowed to be accessed remotely, and after acquiring a remote access property of the resource link, the gateway device confirms that the resource link is not allowed to be accessed remotely, and will not publish the resource link to the cloud resource directory. Correspondingly, after logging in to the cloud resource directory, the client device cannot acquire the resource link. Therefore, an operable control corresponding to the resource link will not be displayed in an interface.

In the act 405, the server device is triggered to perform a function operation corresponding to the first resource link, when an operation request sent by a client device based on the first resource link is received.

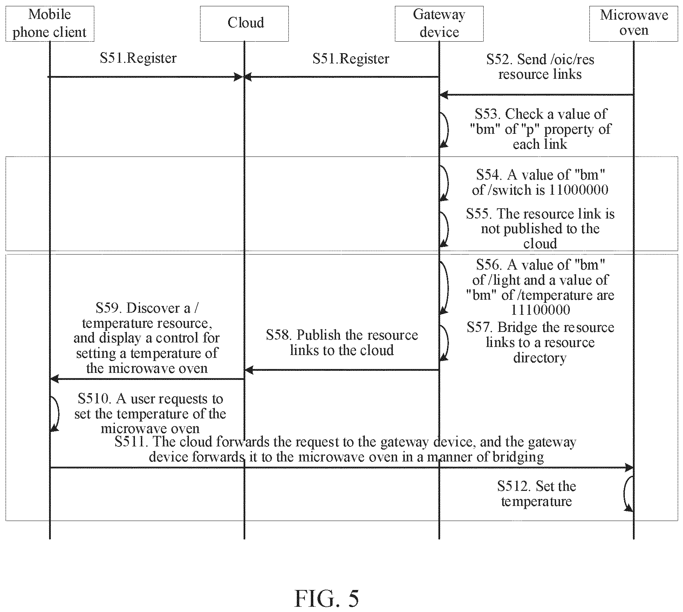

Taking the client device being a smart phone used by a user, the server device being a microwave oven, and the microwave oven having resource links respectively corresponding to a switch function, a temperature regulating function, and a brightness regulating function as an example, please refer to FIG. 5, which shows a schematic diagram of a remote access flow involved in an embodiment of the present application. As shown in FIG. 5, the flow may be as follows.

A user registers in a cloud platform, configures a gateway, and is connected to and logs in to a cloud. After that, the user purchases a new intelligent microwave oven and configures it to enter a home network. At this time, the microwave oven discovers and registers in the gateway, and the gateway publishes a microwave oven resource to the cloud. Operation acts are as the following S51-S512.

In S51, a mobile phone client and a gateway device both register in and log in to a cloud (such as a cloud server).

In S52, a microwave oven connects and registers in the gateway device, and sends its /oic/res resource links to the gateway, or the gateway acquires the /oic/res resource links of the microwave oven. The acquired resource links may be as follows.

```
    [
          {
              "href": "/light",
              "anchor": "ocf//11ace64c-2412-4e9f-aa8b-e6128473bb65",
              "rt": [ "oic.r.light"],
              "if': [ "oic.if s", "oic.if.baseline" ]
              "p": {"bm": 7},
              "eps": [{"ep": "coaps://[fe80::b1d6]:1122"}]
          },
          {
              "href": "/switch",
              "anchor": "ocf://11ace64c-2412-4e9f-aa8b-e6128473bb65",
              "rt": [ "oic.switch.binary" ],
              "if": ["oic.if.a", "oic.if.baseline"],
              "p": {"bm": 3},
              "eps": [{"ep": "coaps://[fe80::bld6]:1122"}]
         },
         {
              "href": "/temperature",
              "anchor": "ocf//11ace64c-2412-4e9f-aa8b-e6128473bb65",
              "rt": [ "oic.r.temperature" ],
              "if": [ "oic.if.a", "oic.if.baseline" ]
              "p": {"bm": 7},
              "eps": [{"ep": "coaps://[fe80::b1d6]:1122"}]
         }
    ]
```

In S53, the gateway device checks a value of "bm" of a "p" property of each resource link in /oic/res resources.

In S54, the gateway device determines that a value of "bm" of /switch is 11000000.

In S55, the gateway device judges that the resource cannot be accessed remotely, and therefore does not bridge the resource link to an RD Client, and the resource link is not published to the cloud.

In S56, the gateway device determines that a value of "bm" of /light and a value of "bm" of /temperature are 11100000.

In S57, the gateway judges that the resources may be accessed remotely, and bridges the resource links to the RD Client.

In S58, the RD Client publishes the resource links of /light and /temperature to the cloud.

In S59, the mobile phone client discovers a /temperature resource of the microwave oven in the cloud, and displays a control for setting a temperature of the microwave oven on an interface.

In S510, the user initiates a request to set the temperature of the microwave oven as 100 degrees.

In S511, after receiving the request, the cloud forwards the request to the gateway device, and the gateway device forwards it to the microwave oven in a manner of bridging.

In S512, after receiving the request, the microwave oven sets the temperature as 100 degrees.

To sum up, according to the solution illustrated in the embodiment of the present application, by setting their own remote access property information for resource links to indicate whether a corresponding resource link is allowed to be accessed remotely, later a gateway device may, according to the remote access property information corresponding to the resource links, publish resource links which are allowed to be accessed to the cloud, and do not publish resource links which are not allowed to be accessed to the cloud, thereby preventing the client device from accessing resource links which are not suitable for remote control in the server device, and expanding application scenarios of remote control in the Internet of Things.

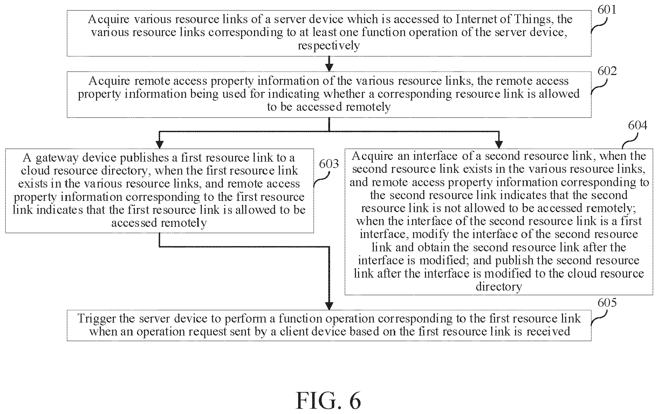

Referring to FIG. 6, FIG. 6 shows a flowchart of a method for controlling a device in Internet of Things according to an embodiment of the present application. The method may be performed by a gateway device, for example, the gateway device may be the gateway device 120 of the network architecture shown in FIG. 1. The method for controlling the device in the Internet of Things may include the following acts 601 to 605.

In the act 601, various resource links of a server device which is accessed to the Internet of Things are acquired, wherein the various resource links correspond to at least one function operation of the server device respectively.

Optionally, the gateway device acquires the above various resource links belonging to a designated type among resource links which the server device has.

In the act 602, remote access property information of the various resource links is acquired, wherein the remote access property information is used for indicating whether a corresponding resource link is allowed to be accessed remotely.

In a possible implementation, the gateway device may acquire designated key values in target policy parameters of the various resource links, when acquiring the remote access property information, wherein a target policy parameter is used for indicating a policy rule for accessing a corresponding resource link; then, designated bits in the designated key values corresponding to the various resource links are acquired as the remote access property information of the various resource links.

In an embodiment of the present application, the above target policy parameter may be a policy parameter "p" of the resource link, and a designated key value may be a key value "bm" in the policy parameter "p".

In an embodiment of the present application, as shown in Table 3, for the "bm", the following rules are specified.

**Table 3**

| Bit position | Policy rule | Comment |
|---|---|---|
| Bit 0 (First least significant bit) | Discoverable | The discoverable rule defines whether the Link is to be contained in a resource discovery message: |
| | | - if the Link is to be contained in the resource discovery message, "p" shall include a "bm" key and a value of the discoverable bit shall be set as 1; |
| | | - if the Link is not to be contained in the resource discovery message, it may be chosen that "p" includes the "bm" key and a value of the discoverable bit is set as 0, or the "bm" key is omitted. |
| Bit 1 (Second least significant bit) | Observable | The observable rule defines whether a resource referenced by a target URI supports a notification (NOTIFY) operation. |
| | | - If the resource supports the notification operation, "p" shall include the "bm" key and a value of the observable bit shall be set as 1. |
| | | - If the resource does not support the notification operation, it may be chosen that "p" includes the "bm" key and a value of the observable bit is set as 0, or the "bm" key is omitted. |
| Bit 2 (Third least significant bit) | Remotely accessible | The remotely accessible rule defines whether the link is to be published and exposed in a cloud resource directory. |
| | | If the link is to be published and exposed in the cloud resource directory with an updatable interface, "p" shall include the "bm" key and a value of remotely accessible bit shall be set as 1. |
| Bits 3 to 7 | -- | Reserved for future use. Values of all reserved bits in the "bm" shall be set as 0. |

In the act 603, the gateway device publishes a first resource link to a cloud resource directory, when the first resource link exists in the various resource links, and remote access property information corresponding to the first resource link indicates that the first resource link is allowed to be accessed remotely.

Herein, the first resource link is any resource link among the various resource links.

In the act 604, an interface of a second resource link is acquired, when the second resource link exists in the various resource links, and remote access property information corresponding to the second resource link indicates that the second resource link is not allowed to be accessed remotely; when the interface of the second resource link is a first interface, the interface of the second resource link is modified and the second resource link after the interface is modified is obtained; and the second resource link after the interface is modified is published to the cloud resource directory.

Herein, the second resource link is any resource link other than the first resource link among the various resource links; and the first interface is an interface for receiving remote access.

Optionally, the gateway device may replace the first interface in the second resource link with a second interface and obtain the second resource link after the interface is modified, when the interface of the second resource link is modified; wherein, the second interface is an interface other than the interface for receiving the remote access; or, the first interface is deleted from the second resource link and the second resource link after the interface is modified is obtained.

In an embodiment of the present application, when remote access property information of any resource link of the above various resource links indicates that the resource link is not allowed to be accessed remotely, the gateway device may publish the resource link to the cloud resource directory, but prior to this, an interface of the resource link is modified to prohibit remote access to the resource link if the interface of the resource link is an interface for receiving remote access.

According to the solution illustrated in the embodiment of the present application, for a certain server device, when a resource link of a certain designated type in the server device is not suitable for being accessed remotely, the developer may set remote access property information in the resource link to indicate that the resource link is not allowed to be accessed remotely, and after acquiring a remote access property of the resource link, the gateway device confirms that the resource link is not allowed to be accessed remotely, and further queries an interface of the resource link. If the interface of the resource link is an interface for receiving remote access, the interface is modified so that the resource link cannot accept remote access, and the resource link after the interface is modified is published to the cloud resource directory. Correspondingly, after logging in to the cloud resource directory, a client device may acquire the resource link, and may also display the resource link in an interface, but an operation of remote access to the resource link cannot be responded. For example, the client device may display one inoperable interface element corresponding to the resource link in the interface, for example, display one information display box only for displaying a state corresponding to the resource link.

In the act 605, the server device is triggered to perform a function operation corresponding to the first resource link, when an operation request sent by a client device based on the first resource link is received.

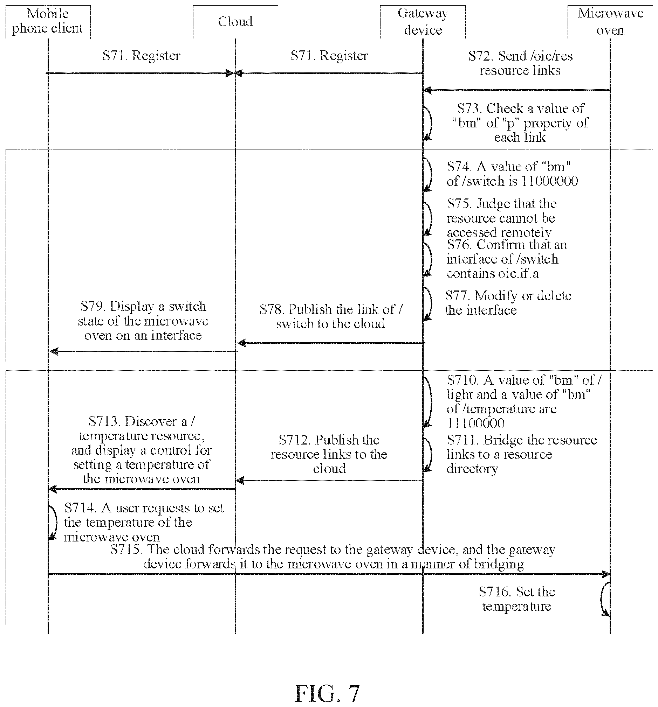

Also taking the client device being a smart phone used by a user, the server device being a microwave oven, and the microwave oven having resource links respectively corresponding to a switch function, a temperature regulating function, and a brightness regulating function as an example, please refer to FIG. 7, which shows a schematic diagram of a remote access flow involved in an embodiment of the present application. As shown in FIG. 7, the flow may be as follows.

In S71, a mobile phone client and a gateway device both register in and log in to a cloud (such as a cloud server).

In S72, a microwave oven connects and registers in the gateway device, and sends its /oic/res resource links to the gateway, or the gateway acquires the /oic/res resource links of the microwave oven. The acquired resource links may be as follows.

```
    [
         {
              "href': "/light",
              "anchor": "ocf//11ace64c-2412-4e9f-aa8b-e6128473bb65",
              "rt": [ "oic.r.light"],
              "if": [ "oic.ifs", "oic.if.baseline" ]
              "p": {"bm": 7},
              "eps": [{"ep": "coaps:/ /[fe80: :bld6]: 1122"}]
         },
         {
              "href": "/switch",
              "anchor": "ocf//11ace64c-2412-4e9f-aa8b-e6128473bb65",
              "rt": [ "oic.switch.binary" ],
              "if": ["oic.ifa", "oic.if.baseline"],
              "p": {"bm": 3},
              "eps": [{"ep": "coaps:/ /[fe80: :bld6]: 1122"}] }
          {
              "href": "/temperature",
              "anchor": "ocf://11ace64c-2412-4e9f-aa8b-e6128473bb65",
              "rt": [ "oic.r.temperature" ],
              "if": [ "oic.if.a", "oic.if.baseline" ]
              "p": {"bm": 7},
              "eps": [{"ep": "coaps://[fe80::b1d6]:1122"}]
         }
    ]
```

In S73, the gateway device checks a value of "bm" of a "p" property of each resource link in /oic/res resources.

In S74, the gateway device determines that a value of "bm" of /switch is 11000000.

In S75, the gateway device judges that the resource cannot be accessed remotely.

In S76, the gateway device further confirms that an interface of /switch contains oic.if.a, indicating that the resource is operable.

In S77, after modifying the oic.if.a interface of the resource link to an oic.ifs interface (or directly deleting the oic.if.a interface), the gateway device bridges it to an RD Client.

In S78, the RD Client publishes the link of /switch to the cloud.

In S79, the mobile phone client acquires a /switch resource from the cloud, and displays a switch state of the microwave oven on an interface.

In S710, the gateway device determines that a value of "bm" of /light and a value of "bm" of /temperature are 11100000.

In S711, the gateway judges that the resources may be accessed remotely, and bridges the resource links to the RD Client.

In S712, the RD Client publishes the resource links of flight and /temperature to the cloud.

In S713, the mobile phone client discovers a /temperature resource of the microwave oven in the cloud, and displays a control for setting a temperature of the microwave oven on an interface.

In S714, a user initiates a request to set the temperature of the microwave oven as 100 degrees.

In S715, after receiving the request, the cloud forwards the request to the gateway device, and the gateway device forwards it to the microwave oven in a manner of bridging.

In S716, after receiving the request, the microwave oven sets the temperature as 100 degrees.

To sum up, according to the solution illustrated in the embodiment of the present application, by setting their own remote access property information for resource links to indicate whether a corresponding resource link is allowed to be accessed remotely, later a gateway device may, according to the remote access property information corresponding to the resource links, publish resource links which are allowed to be accessed to the cloud, and after interfaces of resource links which are not allowed to be accessed are modified, do not publish the resource links to the cloud, thereby preventing the client device from accessing resource links which are not suitable for remote control in the server device, and expanding application scenarios of remote control in the Internet of Things.

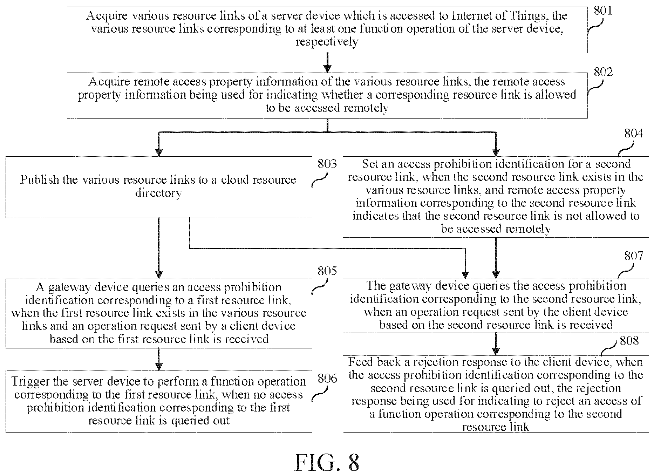

Referring to FIG. 8, FIG. 8 shows a flowchart of a method for controlling a device in Internet of Things according to an embodiment of the present application. The method may be performed by a gateway device, for example, the gateway device may be the gateway device 120 of the network architecture shown in FIG. 1. The method for controlling the device in the Internet of Things may include the following acts 801 to 808.

In the act 801, various resource links of a server device which is accessed to the Internet of Things are acquired, wherein the various resource links correspond to at least one function operation of the server device respectively.

Optionally, the gateway device acquires the above various resource links belonging to a designated type among resource links which the server device has.

In the act 802, remote access property information of the various resource links is acquired, wherein the remote access property information is used for indicating whether a corresponding resource link is allowed to be accessed remotely.

In a possible implementation, the gateway device may acquire designated key values in target policy parameters of the various resource links, when acquiring the remote access property information, wherein a target policy parameter is used for indicating a policy rule for accessing a corresponding resource link; then, designated bits in the designated key values corresponding to the various resource links are acquired as the remote access property information of the various resource links.

In an embodiment of the present application, the above target policy parameter may be a policy parameter "p" of the resource link, and a designated key value may be a key value "bm" in the policy parameter "p".

In an embodiment of the present application, as shown in Table 4, for the "bm", the following rules are specified.

**Table 4**

| Bit position | Policy rule | Comment |
|---|---|---|
| Bit 0 (First least significant bit) | Discoverable | The discoverable rule defines whether the Link it to be contained in a resource discovery message: |
| | | - if the Link is to be contained in the resource discovery message, "p" shall include a "bm" key and a value of the discoverable bit shall be set as 1; |
| | | - if the Link is not to be contained in the resource discovery message, it may be chosen that "p" includes the "bm" key and a value of the discoverable bit is set as 0, or the "bm" key is omitted. |
| Bit 1 (Second least significant bit) | Observable | The observable rule defines whether a resource referenced by a target URI supports a notification (NOTIFY) operation. |
| | | - If the resource supports the notification operation, "p" shall include the "bm" key and a value of the observable bit shall be set as 1. |
| | | - If the resource does not support the notification operation, it may be chosen that "p" includes the "bm" key and a value of the observable bit is set as 0 or the "bm" key is omitted. |
| Bit 2 (Third least significant bit) | Remotely accessible | The remotely accessible rule defines whether a link is to be published and exposed in a cloud resource directory. |
| | | If the link is to be published and exposed in the cloud resource directory to enable remote access to a resource to which it is linked, "p" shall include the "bm" key and a value of remotely accessible bit shall be set as 1. |
| Bits 3 to 7 | -- | Reserved for future use. Values of all reserved bits in the "bm" shall be set as 0. |

In the act 803, the gateway device publishes the various resource links to a cloud resource directory.

In an embodiment of the present application, when publishing resource links to the cloud, the gateway device publishes the acquired various acquired resource links to the cloud resource directory.

In the act 804, an access prohibition identification is set for a second resource link, when the second resource link exists in the various resource links, and remote access property information corresponding to the second resource link indicates that the second resource link is not allowed to be accessed remotely.

In an embodiment of the present application, for a resource link which is not allowed to be accessed remotely, the gateway device locally sets one access prohibition identification for the resource link, and performs storing of the resource link, for query and usage later when an operation request is received.

In the act 805, the gateway device queries an access prohibition identification corresponding to a first resource link, when the first resource link exists in the various resource links and an operation request sent by a client device based on the first resource link is received.

In an embodiment of the present application, when receiving one operation request, the gateway device may query whether a resource link corresponding to the operation request has a corresponding access prohibition identification.

In the act 806, the server device is triggered to perform a function operation corresponding to the first resource link, when no access prohibition identification corresponding to the first resource link is queried out.

In an embodiment of the present application, the gateway device will not set an access prohibition identification for the first resource link, or sets an access permission identification for the first resource link, when the remote access property information corresponding to the first resource link indicates that the first resource link is allowed to be accessed remotely. Correspondingly, the gateway device may determine that the first resource link is a resource link which is allowed to be accessed, when the gateway device does not query out the access prohibition identification corresponding to the first resource link corresponding to an operation request, and in this case, the server device may be triggered to perform the function operation corresponding to the first resource link.

In the act 807, the gateway device queries the access prohibition identification corresponding to the second resource link, when an operation request sent by the client device based on the second resource link is received.

In the act 808, a rejection response is fed back to the client device, when the access prohibition identification corresponding to the second resource link is queried out, wherein the rejection response is used for indicating to reject an access of a function operation corresponding to the second resource link.

Correspondingly, when the gateway device queries out an access prohibition identification corresponding to a resource link corresponding to an operation request, it may be determined that the resource link is a resource link which is not allowed to be accessed, and in this case, the gateway device will not trigger the server device to perform the function operation corresponding to the second resource link, and will feed back a rejection response to the client device.

Optionally, when the access prohibition identification corresponding to the second resource link is queried out, the act of feeding back, by the gateway device, the rejection response to the client device may include: acquiring, by the gateway device, a login identification of the client device; and feeding back the rejection response to the client device, when the access prohibition identification corresponding to the second resource link is queried out and the login identification of the client device does not match a binding identification of the server device; wherein the login identification is a user identification logging in the client device, and the binding identification is a user identification bound with the server device in advance.

In an embodiment of the present application, remote access control of resource links may be performed for different identifications, that is to say, when receiving the operation request based on the second resource link and querying out the access prohibition identification corresponding to the second resource link, the gateway device further detects whether the login identification of the client device is the binding identification of the server device, if the two are consistent, it is indicated that the client device has an authority to remotely access the second resource link, and the server device is triggered to perform the function operation corresponding to the operation request; otherwise, it is considered that the client device does not have the authority to remotely access the second resource link, and triggering the server device to perform the function operation corresponding to the operation request is rejected.

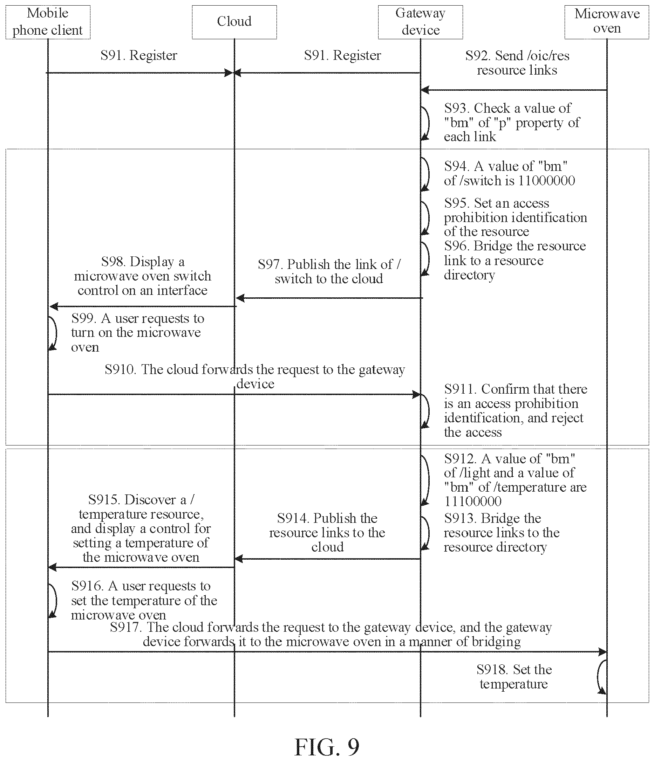

Also taking the client device being a smart phone used by a user, the server device being a microwave oven, and the microwave oven having resource links respectively corresponding to a switch function, a temperature regulating function, and a brightness regulating function as an example, please refer to FIG. 9, which shows a schematic diagram of a remote access flow involved in an embodiment of the present application. As shown in FIG. 9, the flow may be as follows.

In S91, a mobile phone client and a gateway device both register in and log in to a cloud (such as a cloud server).

In S92, a microwave oven connects and registers in the gateway device, and sends its /oic/res resource links to the gateway, or the gateway acquires the /oic/res resource links of the microwave oven. The acquired resource links may be as follows.

```
    [
          {
              "href": "/light",
              "anchor": "ocf://11ace64c-2412-4e9f-aa8b-e6128473bb65",
              "rt": [ "oic.r.light"],
              "if": [ "oic.if.s", "oic.if.baseline" ]
              "p": {"bm": 7},
              "eps": [{"ep": "coaps://[fe80::bld6]:1122"}]
          },
          {
              "href": "/switch",
              "anchor": "ocf://11ace64c-2412-4e9f-aa8b-e6128473bb65",
              "rt": [ "oic.switch.binary" ],
              "if": ["oic.ifa", "oic.if.baseline"],
              "p": {"bm": 3},
              "eps": [{"ep": "coaps://[fe80::bld6]:1122"}]
         },
         {
              "href": "/temperature",
              "anchor": "ocf://11ace64c-2412-4e9f-aa8b-e6128473bb65",
              "rt": [ "oic.r.temperature" ],
              "if": [ "oic.ifa", "oic.if.baseline" ]
              "p": {"bm": 7},
              "eps": [{"ep": "coaps://[fe80::bld6]:1122"}]
         }
    ]
```

In S93, the gateway device checks a value of "bm" of a "p" property of each resource link in /oic/res resources.

In S94, the gateway device determines that a value of "bm" of /switch is 11000000.

In S95, the gateway device judges that the resource cannot be accessed remotely, and sets an access prohibition identification of the resource to identify rejection of access to the resource.

In S96, the gateway device bridges the resource to an RD Client.

In S97, the RD Client publishes the link of /switch to the cloud.

In S98, the mobile phone client discovers the /switch resource of the microwave oven in the cloud, and displays a microwave oven switch control on an interface.

In S99, a user initiates a request to turn on the microwave oven.

In S910, the cloud forwards the request to the gateway device after receiving the request.

In S911, the gateway confirms there is an access prohibition identification of /switch, and rejects the access to the resource.

In S912, the gateway device determines that a value of "bm" of /light and a value of "bm" of /temperature are 11100000.

In S913, the gateway judges that the resources may be accessed remotely, and bridges the resource links to the RD Client.

In S914, the RD Client publishes the resource links of /light and /temperature to the cloud.

In S915, the mobile phone client discovers a /temperature resource of the microwave oven in the cloud, and displays a control for setting a temperature of the microwave oven on the interface.

In S916, a user initiates a request to set the temperature of the microwave oven as 100 degrees.

In S917, after receiving the request, the cloud forwards the request to the gateway device, and the gateway device forwards it to the microwave oven in a manner of bridging.

In S918, after receiving the request, the microwave oven sets the temperature as 100 degrees.

To sum up, according to the solution illustrated in the embodiment of the present application, by setting their own remote access property information for resource links to indicate whether a corresponding resource link is allowed to be accessed remotely, later, when receiving an operation request, a gateway device may, according to the remote access property information corresponding to the resource links, trigger the operation request corresponding to the resource link which is allowed to be accessed, but not trigger the operation request corresponding to the resource link which is not allowed to be accessed, thereby preventing the client device from accessing resource links that are not suitable for remote control in the server device, and expanding application scenarios of remote control in the Internet of Things.

The following are apparatus embodiments of the present application, which may be used for implementing the method embodiments of the present application. For details not disclosed in the apparatus embodiments of the present application, please refer to the method embodiments of the present application.

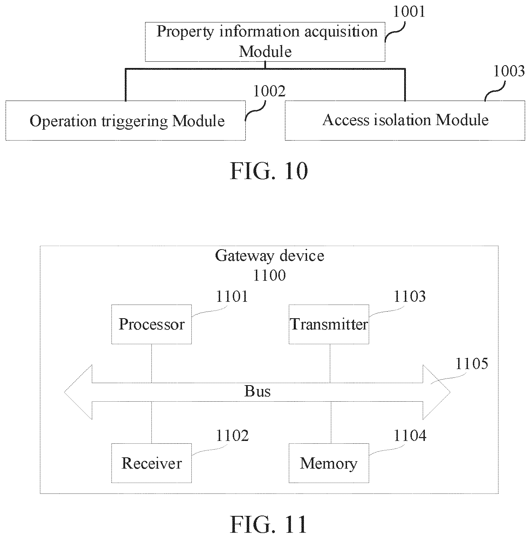

Referring to FIG. 10, FIG. 10 shows a block diagram of an apparatus for controlling a device in Internet of Things according to an embodiment of the present application. The apparatus has a function of implementing an example of the above method for controlling the device in the Internet of Things. The function may be accomplished by hardware or by executing corresponding software by hardware. The apparatus may be the gateway device introduced above, or may be disposed in the gateway device. As shown in FIG. 10, the apparatus may include: a property information acquisition module 101, an operation triggering module 102, and an access isolation module 103.

The property information acquisition module 1001 is configured to acquire remote access property information of various resource links of a server device, wherein the remote access property information is used for indicating whether a corresponding resource link is allowed to be accessed remotely.

The operation triggering module 1002is configured to trigger the server device to perform a function operation corresponding to a first resource link, when the first resource link exists in the various resource links, the remote access property information corresponding to the first resource link indicates that remote access is allowed, and an operation request sent by a client device based on the first resource link is received.

The access isolation module 1003 is configured to perform access isolation on a second resource link, when the second resource link exists in the various resource links, and the remote access property information corresponding to the second resource link indicates that remote access is not allowed; wherein the access isolation is used for restricting remote access, performed by the client device, to the second resource link.

Optionally, the apparatus further includes: a first publishing module, configured to publish the first resource link to a cloud resource directory.

Optionally, the access isolation module is configured to not publish the second resource link.

Optionally, the access isolation module includes: an interface acquisition unit, configured to acquire an interface of the second resource link; an interface modification unit, configured to modify the interface of the second resource link when the interface of the second resource link is a first interface, and obtain the second resource link after the interface is modified; wherein the first interface is an interface for receiving remote access; and a publishing unit, configured to publish the second resource link after the interface is modified to a cloud resource directory.

Optionally, the interface modification unit is configured to, replace the first interface in the second resource link with a second interface and obtain the second resource link after the interface is modified; or, delete the first interface from the second resource link and obtain the second resource link after the interface is modified.

Optionally, the apparatus further includes: a identification setting module, configured to set an access prohibition identification for the second resource link; wherein the access isolation module is configured to, query the access prohibition identification corresponding to the second resource link, when an operation request sent based on the second resource link is received; and feed back a rejection response to the client device, when the access prohibition identification corresponding to the second resource link is queried out, wherein the rejection response is used for indicating to reject an access of a function operation corresponding to the second resource link.

Optionally, the operation triggering module is configured to, query an access prohibition identification corresponding to the first resource link, when the operation request sent based on the first resource link is received; and trigger the server device to perform the function operation corresponding to the first resource link, when no access prohibition identification corresponding to the first resource link is queried out.

Optionally, when the rejection response is fed back to the client device, the access isolation module is configured to, acquire a login identification of the client device; and feed back the rejection response to the client device, when the access prohibition identification corresponding to the second resource link is queried out and the login identification of the client device does not match a binding identification of the server device; wherein the login identification is a user identification logging in the client device, and the binding identification is a user identification bound with the server device in advance.

Optionally, the property information acquisition module is configured to, acquire designated key values in target policy parameters of the various resource links, wherein the target policy parameter is used for indicating a policy rule for accessing a corresponding resource link; and acquire designated bits in the designated key values corresponding to the various resource links as the remote access property information of the various resource links.

Optionally, the apparatus further includes: a resource link acquisition module, configured to acquire various resource links belonging to a designated type among resource links which the server device has, before the property information acquisition module acquires the remote access property information of the various resource links of the server device.

To sum up, according to the solution illustrated in the embodiment of the present application, by setting their own remote access property information for resource links to indicate whether a corresponding resource link is allowed to be accessed remotely, later a gateway device may control, according to the remote access property information corresponding to the resource links, a client device to access resource links which are allowed to be accessed, and restrict the remote access, performed by the client device, to resource links which are not allowed to be accessed, thereby preventing the client device from accessing resource links which are not suitable for remote control in the server device, and expanding application scenarios of remote control in the Internet of Things.

It should be noted that division of the aforementioned functional modules is just taken as an example for description when the apparatus provided in the aforementioned embodiment implements its function, and in a practical application, the aforementioned functions may be allocated to different functional modules to accomplish as actually required, that is, a content structure of the device is divided into different functional modules to accomplish all or part of the aforementioned functions.

With regard to the apparatus in the above embodiments, the specific manner in which the respective modules perform operations has been described in detail in the embodiments relating to the method, and will not be described in detail here.

Referring to FIG. 11, FIG. 11 shows a schematic diagram of a structure of a gateway device 1100 according to an embodiment of the present application. The gateway device 1100 may include: a processor 1101, a receiver 1102, a transmitter 1103, a memory 1104, and a bus 1105.

The processor 1101 includes one or more processing cores. The processor 1101 performs various functional applications and information processing by running software programs and modules.

The receiver 1102 and the transmitter 1103 may be implemented as a communication assembly, which may be a communication chip. The communication chip may also be called a transceiver.

The memory 1104 is connected to the processor 1101 via the bus 1105.

The memory 1104 may be configured to store a computer program, and the processor 1101 is configured to execute the computer program to implement various acts performed by a terminal in the above method embodiment.

In addition, the memory 1104 may be implemented by any type of transitory or non-transitory storage device or a combination thereof. The transitory or non-transitory storage device includes, but is not limited to, a magnetic disk or an optical disk, an electrically erasable programmable read only memory, an erasable programmable read only memory, a static random access memory, a read only memory, a magnetic memory, a flash memory, and a programmable read only memory.

In an exemplary embodiment, the gateway device includes a processor, a memory, and a transceiver (the transceiver may include a receiver and a transmitter, wherein the receiver is configured to receive information, and the transmitter is configured to send information); the processor is configured to acquire remote access property information of various resource links of a server device, wherein the remote access property information is used for indicating whether a corresponding resource link is allowed to be accessed remotely; the processor is further configured to trigger the server device to perform a function operation corresponding to a first resource link, when the first resource link exists in the various resource links, the remote access property information corresponding to the first resource link indicates that remote access is allowed, and an operation request sent by a client device based on the first resource link is received; and the processor is further configured to perform access isolation on a second resource link, when the second resource link exists in the various resource links, and the remote access property information corresponding to the second resource link indicates that the second resource link is not allowed to be accessed remotely, wherein the access isolation is used for restricting remote access, performed by the client device, to the second resource link.

The processor and the transceiver in the gateway device involved in the embodiment of the present application may execute the above method for controlling the device in the Internet of Things shown in FIG. 2, FIG. 4, FIG. 6, or FIG. 8, which will not be repeated here.

An embodiment of the present application further provides a computer-readable storage medium, storing a computer program thereon, the computer program is loaded and executed by a processor to implement the above method for controlling the device in the Internet of Things shown in FIG. 2, FIG. 4, FIG. 6, or FIG. 8.

The present application further provides a computer program product, wherein the computer program product enables a terminal to perform the above method for controlling the device in the Internet of Things shown in FIG. 2, FIG. 4, FIG. 6, or FIG. 8 when being run on the terminal.

A person skilled in the art may appreciate that, in one or more examples described above, functions described in the embodiments of the present application may be implemented using hardware, software, firmware, or any combination thereof. When implemented using software, these functions may be stored in a computer-readable medium or be transmitted as one or more instructions or codes on the computer-readable medium. The computer-readable medium includes a computer storage medium and a communication medium, wherein the communication medium includes any medium for transferring a computer program from one place to another place. The storage medium may be any available medium that can be accessed by a general-purpose or special-purpose computer.

The above are only exemplary embodiments of the present application, which are not intended to limit the present application. Any modification, equivalent substitution, improvement, etc., made within the spirit and principles of the present application shall be included in the protection scope of the present application.

## Claims

1. A method for controlling a device in Internet of Things, wherein the method is performed by a gateway device, and the method comprises:
acquiring remote access property information of various resource links of a server device, wherein the remote access property information is used for indicating whether a corresponding resource link is allowed to be accessed remotely;
triggering the server device to perform a function operation corresponding to a first resource link, when the first resource link exists in the various resource links, remote access property information corresponding to the first resource link indicates that remote access is allowed, and an operation request sent by a client device based on the first resource link is received; and
performing access isolation on a second resource link, when the second resource link exists in the various resource links and remote access property information corresponding to the second resource link indicates that remote access is not allowed; wherein the access isolation is used for restricting remote access, performed by the client device, to the second resource link.

2. The method of claim 1, wherein, before triggering the server device to perform the function operation corresponding to the first resource link, when the first resource link exists in the various resource links, the remote access property information corresponding to the first resource link indicates that remote access is allowed, and the operation request sent by the client device based on the first resource link is received, the method further comprises:
publishing the first resource link to a cloud resource directory.

3. The method of claim 1, wherein performing access isolation on the second resource link, when the second resource link exists in the various resource links, and the remote access property information corresponding to the second resource link indicates that remote access is not allowed, comprises:
not publishing the second resource link.

4. The method of claim 1, wherein performing access isolation on the second resource link, when the second resource link exists in the various resource links, and the remote access property information corresponding to the second resource link indicates that remote access is not allowed, comprises:
acquiring an interface of the second resource link;
modifying the interface of the second resource link when the interface of the second resource link is a first interface, and obtaining the second resource link after the interface is modified; wherein the first interface is an interface for receiving remote access; and
publishing the second resource link after the interface is modified to a cloud resource directory.

5. The method of claim 4, wherein modifying the interface of the second resource link when the interface of the second resource link is the first interface, comprises:
replacing the first interface in the second resource link with a second interface, and obtaining the second resource link after the interface is modified;
or,
deleting the first interface from the second resource link, and obtaining the second resource link after the interface is modified.

6. The method of claim 1, wherein, before performing access isolation on the second resource link, when the second resource link exists in the various resource links, and the remote access property information corresponding to the second resource link indicates that remote access is not allowed, the method further comprises:
setting an access prohibition identification for the second resource link; and
wherein performing access isolation on the second resource link, when the second resource link exists in the various resource links, and the remote access property information corresponding to the second resource link indicates that remote access is not allowed, comprises:
querying the access prohibition identification corresponding to the second resource link, when an operation request sent based on the second resource link is received; and
feeding back a rejection response to the client device, when the access prohibition identification corresponding to the second resource link is queried out, wherein the rejection response is used for indicating to reject an access of a function operation corresponding to the second resource link.

7. The method of claim 6, wherein triggering the server device to perform the function operation corresponding to the first resource link, when the second resource link exists in the various resource links, the remote access property information corresponding to the second resource link indicates that remote access is allowed, and the operation request sent by the client device based on the first resource link is received, comprises:
querying an access prohibition identification corresponding to the first resource link, when the operation request sent based on the first resource link is received; and
triggering the server device to perform the function operation corresponding to the first resource link, when no access prohibition identification corresponding to the first resource link is queried out.

8. The method of claim 6, wherein feeding back the rejection response to the client device, when the access prohibition identification corresponding to the second resource link is queried out, comprises:
acquiring a login identification of the client device; and
feeding back the rejection response to the client device, when the access prohibition identification corresponding to the second resource link is queried out and the login identification of the client device does not match a binding identification of the server device; wherein the login identification is a user identification logging in the client device, and the binding identification is a user identification bound with the server device in advance.

9. The method of any one of claims 1 to 8, wherein acquiring the remote access property information of various resource links of the server device, comprises:
acquiring designated key values in target policy parameters of the various resource links, wherein the target policy parameter is used for indicating a policy rule for accessing a corresponding resource link; and
acquiring designated bits in the designated key values corresponding to the various resource links as the remote access property information of the various resource links.

10. The method of any one of claims 1 to 8, wherein, before acquiring the remote access property information of various resource links of the server device, the method further comprises:
acquiring the various resource links belonging to a designated type among resource links which the server device has.

11. An apparatus for controlling a device in Internet of Things, wherein the apparatus is applied in a gateway device, and the apparatus comprises:
a property information acquisition module, configured to acquire remote access property information of various resource links of a server device, wherein the remote access property information is used for indicating whether a corresponding resource link is allowed to be accessed remotely;
an operation triggering module, configured to trigger the server device to perform a function operation corresponding to a first resource link, when the first resource link exists in the various resource links, remote access property information corresponding to the first resource link indicates that remote access is allowed, and an operation request sent by a client device based on the first resource link is received; and
an access isolation module, configured to perform access isolation on a second resource link, when the second resource link exists in the various resource links and remote access property information corresponding to the second resource link indicates that remote access is not allowed; wherein the access isolation is used for restricting remote access, performed by the client device, to the second resource link.

12. The apparatus of claim 11, wherein the apparatus further comprises:
a first publishing module, configured to publish the first resource link to a cloud resource directory.

13. The apparatus of claim 11, wherein
the access isolation module is configured to not publish the second resource link.

14. The apparatus of claim 11, wherein the access isolation module comprises:
an interface acquisition unit, configured to acquire an interface of the second resource link;
an interface modification unit, configured to modify the interface of the second resource link when the interface of the second resource link is a first interface, and obtain the second resource link after the interface is modified; wherein the first interface is an interface for receiving remote access; and
a publishing unit, configured to publish the second resource link after the interface is modified to a cloud resource directory.

15. The apparatus of claim 14, wherein the interface modification unit is configured to,
replace the first interface in the second resource link with a second interface and obtain the second resource link after the interface is modified;
or,
delete the first interface from the second resource link, and obtain the second resource link after the interface is modified.

16. The apparatus of claim 11, wherein the apparatus further comprises:
an identification setting module, configured to set an access prohibition identification for the second resource link; and
wherein the access isolation module is configured to,
query the access prohibition identification corresponding to the second resource link, when an operation request sent based on the second resource link is received; and
feed back a rejection response to the client device, when the access prohibition identification corresponding to the second resource link is queried out, wherein the rejection response is used for indicating to reject an access of a function operation corresponding to the second resource link.

17. The apparatus of claim 16, wherein the operation triggering module is configured to,
query an access prohibition identification corresponding to the first resource link, when the operation request sent based on the first resource link is received; and
trigger the server device to perform the function operation corresponding to the first resource link, when no access prohibition identification corresponding to the first resource link is queried out.

18. The apparatus of claim 17, wherein when the rejection response is fed back to the client device, the access isolation module is configured to,
acquire a login identification of the client device; and
feed back the rejection response to the client device, when the access prohibition identification corresponding to the second resource link is queried out and the login identification of the client device does not match a binding identification of the server device; wherein the login identification is a user identification logging in the client device, and the binding identification is a user identification bound with the server device in advance.

19. The apparatus of any one of claims 11 to 18, wherein the property information acquisition module is configured to,
acquire designated key values in target policy parameters of the various resource links, wherein the target policy parameter is used for indicating a policy rule for accessing a corresponding resource link; and
acquire designated bits in the designated key values corresponding to the various resource links as the remote access property information of the various resource links.

20. The apparatus of any one of claims 11 to 18, wherein the apparatus further comprises:
a resource link acquisition module, configured to acquire the various resource links belonging to a designated type among resource links which the server device has, before the property information acquisition module acquires the remote access property information of the various resource links of the server device.

21. A gateway device, wherein the gateway device comprises a processor, a memory, and a transceiver;
the processor is configured to acquire remote access property information of various resource links of a server device, wherein the remote access property information is used for indicating whether a corresponding resource link is allowed to be accessed remotely;
the processor is further configured to trigger the server device to perform a function operation corresponding to a first resource link, when the first resource link exists in the various resource links, remote access property information corresponding to the first resource link indicates that remote access is allowed, and an operation request sent by a client device based on the first resource link is received; and
the processor is further configured to perform access isolation on a second resource link, when the second resource link exists in the various resource links, and remote access property information corresponding to the second resource link indicates that remote access is not allowed; wherein the access isolation is used for restricting remote access, performed by the client device, to the second resource link.

22. A computer-readable storage medium, storing a computer program thereon, wherein the computer program is configured to be executed by a processor to implement the method for controlling the device in the Internet of Things of any one of claims 1 to 10.
